# EUROPÄISCHE PATENTSCHRIFT

(11) **EP 1 743 206 B1**
(45) Veröffentlichungstag und Bekanntmachung des Hinweises auf die Patenterteilung: **13.07.2011**
(21) Anmeldenummer: 05749374.4
(22) Anmeldetag: 04.05.2005
(51) Int. Cl.: G02C 5/22

(54) **BRILLENGESTELL**
GLASSES FRAME
MONTURES DE LUNETTES

(30) Priorität: 06.05.2004 DE 202004007224 U
(43) Veröffentlichungstag der Anmeldung: 17.01.2007
(73) Patentinhaber: Proksch, Wolfgang, 75239 Eisingen (DE)
(72) Erfinder: Proksch, Wolfgang, 75239 Eisingen (DE)
(74) Vertreter: Schwan - Schwan - Schorer
(86) Internationale Anmeldenummer: PCT/DE2005/000834
(87) Internationale Veröffentlichungsnummer: WO 2005/109081

(56) Entgegenhaltungen:
- EP-A- 0 863 424
- FR-A- 2 815 728
- US-A- 6 116 733
- US-B1- 6 260 965

## Beschreibung

Die vorliegende Erfindung betrifft ein Brillengestell mit einem Rahmen zur Aufnahme von Brillengläsern und zu beiden Seiten des Rahmens je einem Brillenbügel, der mittels einem Scharnier seitlich an den Backenenden des Rahmens angelenkt ist.

Bei derartigen Brillengestellen sind üblicherweise die beiden Brillenbügel jeweils seitlich am Rahmen der Brille mittels Scharnierschrauben oder -stiften fixiert, wobei die Schrauben oder Stifte in Öffnungen mit kreisförmigem Querschnitt am Brillenrahmen angelenkt sind. Die Öffnungen können beispielsweise als Bohrungen ausgeführt sein, die gegebenenfalls (bei Verwendung von Scharnierschrauben) mit entsprechenden Gewinden versehen sind.

Andere bekannte Brillengestelle sind ohne Stifte oder Scharnierschrauben ausgeführt. Die EP 0 863 424 B1 zeigt beispielsweise ein gattungsgemäßes Brillengestell, bei dem der Brillenbügel an dem Ende, welches dem Rahmen zugewandt ist, eine Kerbe aufweist und ein entsprechend geformter Steg des Brillenrahmens in aufgeklapptem Zustand der Brille in diese Kerbe einrastet. Die so entstehende Verbindung zwischen Brillenbügel und Brillenrahmen wird durch eine Federzunge des Brillenbügels fixiert, indem die Federzunge in einer entsprechenden Öffnung am Brillenrahmen einrastet. Es handelt sich somit um ein dreiteiliges, schraubenloses Brillengestell mit Federschamier-Steck-System, welches eine Verbindung ohne Stifte oder Schrauben zwischen Brillenbügel und Rahmen gewährleistet.

Die EP 1 023 626 B 1 offenbart ein Brillengestell, bei dem ebenfalls ein Brillenrahmen und ein Paar Brillenbügel mit Scharnieren verbunden sind, welche ohne Stifte oder Schrauben eine entsprechende Verbindung gewährleisten. In diesem Falle beinhalten die Brillenbügel an ihrem rahmenseitigen Ende jeweils Verlängerungen, die so gewickelt sind, dass ein Rohr entsteht, welches in entsprechende Öffnungen am Brillenrahmen eingreift. In das Rohr ist zudem ein zweiteiliger Scharnierkern eingesetzt, welcher als Friktionselement beim Aufklappen und Zusammenklappen der Brille dient.

Es ist Aufgabe der vorliegenden Erfindung, ein Brillengestell der eingangs genannten Art zu schaffen, bei welchem eine Verbindung zwischen den Brillenbügeln und dem Rahmengestell geschaffen wird, die eine kostengünstigere Fertigung gewährleistet und dennoch einen guten Bedienungskomfort bietet.

Diese Aufgabe wird bei einem Brillengestell der eingangs genannten Art erfindungsgemäß durch die Merkmale von Anspruch 1, nämlich dadurch gelöst, dass der Brillenbügel an dem Ende, welches dem Rahmen zugewandt ist, eine erste Teilzylinderschale mit näherungsweise teilzylinderförmiger Oberfläche aufweist, wobei die Zylinderachse der Drehachse des Scharniers entspricht, und die erste Teilzylinderschale auf einer an dem Rahmen vorgesehenen, eine erste Gleitfläche bildenden zweiten Teilzylinderschale gleitend aufliegt. Der Brillenbügel weist dabei an dem Ende, welches dem Rahmen zugewandt ist, mindestens eine Federzunge auf, welche so an einer zweiten Gleitfläche auf dem Rahmen federnd aufliegt, dass der die zweite Teilzylinderschale aufweisende Bereich des Rahmens zwischen der ersten Teilzylinderschale und der Federzunge federnd aufgenommen ist. Unter Zylinderschale ist dabei eine konvexe Außenfläche oder eine konkave Innenfläche eines Zylinders zu verstehen, und unter einem Teilzylinder ein Zylinder, der entlang seiner Längsachse aufgeschnitten ist, wodurch beispielsweise ein Halbzylinder entstehen kann. Das erfindungsgemäße Brillengestell, bei dem zur Ausbildung des Scharniers keine Scharnierstifte oder -schrauben erforderlich sind, lässt sich somit ohne aufwändige Montageschritte fertigen. Durch die spezielle Ausgestaltung lässt sich das Brillengestell insgesamt oder aber zumindest im Bereich der Scharniere aus einem Flachmaterial fertigen.

Bei einer bevorzugten Ausführungsform der Erfindung ist dabei die erste Zylinderschale auf der Außenseite des Brillenbügels ausgebildet.

Bei weiteren Ausführungsformen hat die erste Teilzylinderschale eine näherungsweise teilzylinderförmige Oberfläche mit einem Drittel bis Dreiviertel eines Kreises als Querschnitt und kann beispielsweise näherungsweise einem Halbzylinder entsprechen.

Der Brillenbügel ist aus einem Flachmaterial, insbesondere einem Metallblech gefertigt, was bedeutet, dass er beispielsweise durch Stanzen, Sägen oder Schneiden aus einem Metallband gefertigt sein kann, und er weist an dem, Ende, welches dem Rahmen zugewandt ist, zwei Längsschlitze auf. Diese Längsschlitze unterteilen den Brillenbügel hier in drei horizontale Streifen, wobei mindestens ein Streifen eine Ausbuchtung aufweist, welche die Teilzylinderschale bildet, oder gebogen ist. Mindestens ein Streifen ist als Federzunge ausgeformt. Auch der Rahmen kann bei weiteren bevorzugten Ausfiihrungsformen der Erfindung an den Backenenden, welche den Bügeln zugewandt sind, als Flachmaterial ausgebildet bzw. gebogen sein und die oben genannten Teilzylinderschalen in Form von Ausbuchtungen aufweisen. Als Materialien zur Fertigung des Rahmens und/oder der Bügel eignen sich insbesondere alle Metalle und Edelmetalle, die technisch als Blech verarbeitbar sind, vorzugsweise Edelstahl, Titanium, Beta-Titanium und alle aushärtbaren Legierungen.

Weiterhin sind bei einem erfindungsgemäßen Brillengestell am Rahmen an den Backenenden jeweils Gleitelemente angebracht deren Oberflächen die oben genannten zweiten Teilzylinderschalen aufweisen. Diese Gleitelemente können einteilig ausgebildet sein und mindestens einen zylinderförmigen Abschnitt aufweisen, dessen Oberfläche zumindest teilweise die oben genannte Teilzylinderschale darstellt. Hierbei weisen die Gleitelemente mindestens eine Auflagefläche auf, mit der sie fest und nicht drehbar am Brillenrahmen aufliegen. Die Gleitelemente können ferner zumindest eine oder mehrere Öffnungen aufweisen, die im wesentlichen parallel und koaxial zur Mittelsenkrechten des zylinderförmigen Abschnitts verlaufen und mit dem Rahmen in Verbindung stehen, indem am Rahmen angebrachte Haltezapfen in diese Öffnungen eingreifen. Die Gleitelemente können sowohl aus Kunststoff bestehen und beispielsweise durch ein Spritzgussverfahren hergestellt sein, als auch aus Metall gefertigt sein. Im Falle eines Kunststoffteils bzw. Kunststoffspritzgussteils sind die Öffnungen des Gleitelements vorzugsweise rechteckig ausgebildet, wohingegen bei einer Fertigung aus Metall die Öffnungen vorzugsweise einen runden Querschnitt haben.

Zum Einsetzen der Brillengläser in das Brillengestell weist jede der Öffnungen zur Aufnahme der beiden Brillengläser vorzugsweise einen radialen Schlitz auf, der dazu dient, dass der Brillenrahmen elastisch aufgebogen und nach dem Einsetzen der Brillengläser wieder verschlossen werden kann. Dieser Schlitz kann bei bevorzugten Ausführungsformen durch Halterungen für Nasenauflagen am Rahmen geführt sein. Zum Einsetzen der Brillengläser können dann die Rahmenöffnung aufgebogen werden, und mit entsprechenden aufsteckbaren Nasenauflagen können dann die beiden Hälften der Nasenauflagen wieder verschlossen werden, wodurch eine sichere Halterung der Brillengläser im Rahmengestell gewährleistet ist.

Alternativ können die Schlitze von den Öffnungen jeweils durch ein Backenende des Brillenrahmens verlaufen, wodurch dieses zweigeteilt wird und aufgebogen werden kann und nach dem Einsetzen der Brillengläser mittels einer aufsteckbaren Sicherung wieder verschlossen werden kann. Bei bevorzugten Ausführungsformen der letztgenannten Variante können im Bereich des Backenendes im wesentlichen U-förmige Sicherungszungen ausgebildet sein, welche durch den Schlitz zweigeteilt werden. Nach dem Aufbiegen des Brillenrahmens und dem Einsetzen der Brillengläser können die Sicherungszungen wiederum mit einer aufsteckbaren Sicherung verschlossen werden, so dass auch hier gewährleistet ist, dass der Schlitz selbst fest verschlossen, und das entsprechende Brillenglas jeweils in der Rahmenöffnung gesichert ist.

Bevorzugte Ausführungsbeispiele der vorliegenden Erfindung werden nachstehend unter Bezugnahme auf die Zeichnungen näher erläutert. Hierbei zeigen:
- Fig. 1: eine Aufsicht auf einen Brillenbügel eines erfindungsgemäßen Brillen- gestells;
- Fig. 2: eine Seitenansicht des Brillenbügels aus Fig. 1;
- Fig. 3: eine Seitenansicht eines Backenendes eines Rahmens des erfindungs- gemäßen Brillengestells;
- Fig. 4: eine Ansicht von oben auf das Backenende von Fig. 3;
- Fig. 5: eine Seitenansicht auf ein Brillengestell nach der Erfindung, wobei ein Backenende und ein Brillenbügel in zusammengebauter Form gezeigt ist;
- Fig. 6: eine Teilansicht von oben auf das Brillengestell aus Fig. 5 mit aufge- klappten Bügeln;
- Fig. 7: eine Aufsicht auf das Brillengestell von Fig. 6, wobei hier das Brillen- gestell mit zusammengeklappten Bügeln gezeigt ist;
- Fig. 8: eine perspektivische Ansicht von schräg oben auf ein Brillengestell nach der Erfindung, wobei ein Ausschnitt mit einem Backenende und einem Teil eines Brillenbügels gezeigt ist;
- Fig. 9: das Ende eines Brillenbügels eines Brillengestells mit Gleitelementen;
- Fig. 10 und 11: eine Seitenansicht jeweils auf ein Backenende eines Brillengestells nach der Erfindung mit Gleitelementen;
- Fig. 12: eine Vorderansicht durch ein Gleitelement mit einer durchgehenden runden Öffnung;
- Fig. 13: eine Ansicht von oben auf das Gleitelement von Fig. 12;
- Fig. 14: eine Vorderansicht durch ein Gleitelement mit rechteckiger Öffnung;
- Fig. 15: eine Ansicht von oben auf das Gleitelement von Fig. 14;
- Fig. 16: eine Teilansicht von oben auf ein Brillengestell in zusammengebauter Form mit Gleitelement, wobei das Rahmenende, das Backenende sowie das entsprechende Ende des Brillenbügels gezeigt sind;
- Fig. 17: eine Ansicht von oben auf das Brillengestell von Fig. 16, wobei hier die Brille mit eingeklappten Bügeln gezeigt ist;
- Fig. 18: eine Seitenansicht des Brillengestells von Fig. 16 in aufgeklapptem Zustand;
- Fig. 19 und 20: jeweils eine Ansicht von oben und von der Seite auf eine aufsteckbare Sicherung;
- Fig. 21: eine perspektivische Teilansicht auf ein Brillengestell mit Gleitelement mit Blick auf das Backenende und das dem Rahmen zugewandte Ende des Brillenbügels;
- Fig. 22: eine Ansicht von vorne auf eines Brillengestell nach der Erfindung;
- Fig. 23: eine Teilvergrößerung des Brillengestells aus Fig. 22, wobei Nasen- auflagenhalterungen mit aufgesteckten Nasenauflagen gezeigt ist;
- Fig. 24: eine alternative Ausführungsform einer Nasenauflagenhalterung mit aufgesteckter schlauchförmiger Nasenauflage; und
- Fig. 25: eine Ansicht einer Ausführungsform eines Sicherungclips.

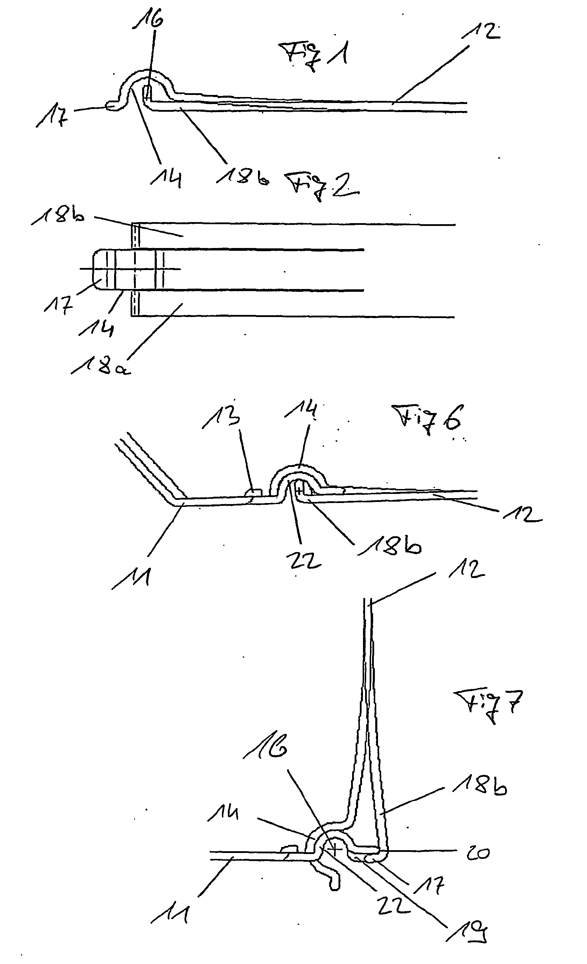

Fig. 1 zeigt einen Brillenbügel 12, wie er bei einer bevorzugten Ausführungsform der Erfindung an einem Brillengestell so angebracht werden kann, dass er um eine Achse 16 drehbar angelenkt ist. An seinem rahmenseitigen Ende weist der Brillenbügel 12 Federzungen 18a und 18b auf, wobei in dieser Ansicht von oben nur die Federzunge 18b zu sehen ist. Weiterhin weist der Brillenbügel 12 an diesem Ende eine erste Teilzylinderschale 14 auf, die näherungsweise eine teilzylinderförmige Oberfläche hat, welche im gezeigten Fall der Innenfläche einer halben Röhre entspricht, wie sie durch das Aufschneiden einer Röhre entlang ihrer Mittelachse entstehen würde. Die Herstellung eines solchen Brillenbügels kann vorzugsweise dadurch geschehen, dass das entsprechend Halbzeug aus einem Metallflachband ausgestanzt, geätzt oder ausgeschnitten wird und mittels Biegen die Teilzylinderschale 14 ausgeformt wird. Bei diesem Biegeprozess wird'am Ende der Teilzylinderschale 14 vorzugsweise ein erster Anschlag 17 ausgeformt, welcher im zusammengebauten Zustand der Brille verhindert, dass der Brillenbügel aus seiner aufgeklappten Position, bei dem er mit dem Brillenrahmen einen Winkel von ca. 90° bildet, weiter nach außen ausgelenkt werden kann.

Fig. 2 zeigt das Ende des Brillenbügels 12 von Fig. 1 in einer Ansicht von der Seite, wodurch beide Federzungen 18a und 18b zu erkennen sind. In dieser Darstellung ist auch zusehen, dass das Ende des Brillenbügels 12 durch eingesägte oder eingeschnittene Schlitze außen die Federzungen 18a und 18b bildet und der mittlere Streifen die erste Teilzylinderschale 14 trägt.

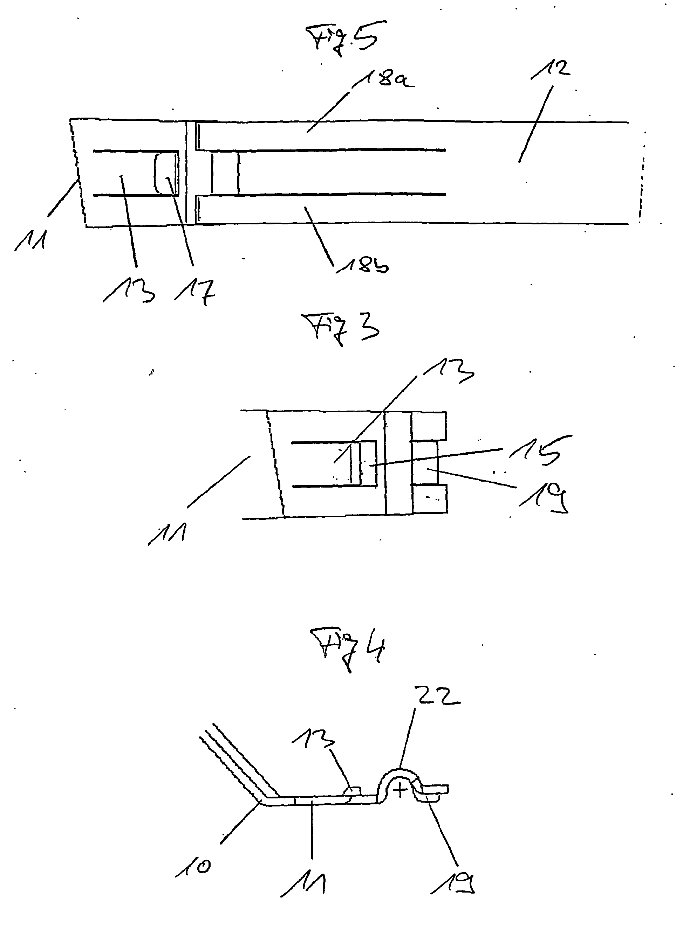

Die Fign. 3 und 4 zeigen ein Backenende 11 mit einer Anschlagsöffnung 15, welche teilweise durch eine Anschlagzunge 13 ausgefüllt ist. Auf die Funktion dieser Anschlagzunge 13 wird weiter unten noch näher eingegangen. Weiterhin weist das Backenende noch einen nach außen (aus der Brille heraus) gebogenen zweiten Anschlag 19 auf, dessen Aufgabe ebenfalls noch beschrieben wird.

Fig. 4 zeigt das Backenende 11 der Fig. 3 in einer Ansicht von oben. Wie hier zu erkennen ist, ist das Backenende 11 als Band ausgebildet und kann somit beispielsweise aus einem metallischen Flachbandmaterial gefertigt sein. Ebenfalls zu erkennen ist, dass das Backenende 11 eine zweite Teilzylinderschale 22 aufweist, die hier eine halbzylinderförmigen Biegung des Backenendes nach innen darstellt In dieser Ansicht von oben ist weiterhin zu sehen, dass die Anschlagzunge 13, die beispielsweise durch Aussägen oder Ausschneiden an drei ihrer Seiten aus dem Backenelement 11 hergestellt sein kann, an ihrem Ende einen Falz in Richtung der Innenseite der Brille aufweist.

Fig. 5 zeigt eine Brille mit dem Backenende 11 und dem Brillenbügel 12 der vorhergehenden Zeichnungen im zusammengebauten Zustand, wobei die Brille in aufgeldappter Form abgebildet ist. In dieser Seitenansicht ist zu erkennen, wie der Anschlag 17 des Brillenbügels 12 in die Anschlagsöffnung 15 des Backenendes 11 eingreift und dort an der Anschlagzunge 13 anstößt. Dadurch wird vermieden, dass der Brillenbügel 12 weiter als gewünscht nach außen (im Bild aus der Ebene heraus, beim Träger von der linken Kopfhälfte weg) geklappt wird. Dadurch, dass am Backenende 11 nicht nur eine Anschlagsöffnung 15 ausgebildet ist, sondern die Anschlagszunge 13 durch entsprechende Schlitze ausgeformt ist, erzielt man statt eines abrupten Anschlags des Brillenbügels 12 eine elastische Endposition desselben, was sowohl Bedienung als auch Tragekomfort der Brille erhöht.

In den Fig. 6 und 7 ist der entsprechende Ausschnitt der Brille aus Fig. 5 in einer Ansicht von oben gezeigt, wobei in Fig. 6 wiederum wie in Fig. 5 die Brille zum Tragen so aufgeklappt ist, dass der Brillenbügel 12 mehr oder weniger in einer Linie mit dem Backenende 11 steht. In Fig. 7 ist der Brillenbügel 12 beispielsweise zum Verstauen der Brille eingeklappt. Im Falle der Fig. 6 ist der Anschlag 17 des Brillenbügels 12 nicht mehr zu erkennen, da er in der Anschlagsöffnung 15 des Backenendes 11 zum Liegen kommt, jedoch sieht man, dass die Anschlagszunge 13 an ihrem Ende, welches dem Brillenbügel 12 zugewandt ist, nach innen gebogen ist, so dass der Anschlag 17 in dieser Position anstößt. Die Federzungen 18a und 18b greifen im ausgeklappten Zustand der Brille mit dem Ende, welches dem Rahmen zugewandt ist, von hinten gegen die zweite Teilzylinderschale 22 des Backenendes 11, was dadurch gewährleistet ist, dass ihre Enden um 90° nach innen umgebogen sind. Wie in Fig. 6 anhand der Federzunge 18b zu erkennen ist, entsteht hierdurch eine Art Zangenwirkung der Federzunge 18b und der ersten Teilzylinderschale 14 des Brillenbügels 12, wobei diese beiden Elemente von außen und von innen die zweite Teilzylinderschale 22 des Backenendes 11 umfassen. Werden nun die beiden Brillenbügel der Brille nach innen geklappt, um vom ausgeklappten Zustand gemäß der Fig. 6 in den eingeklappten Zustand gemäß Fig. 7 zu gelangen, so gleitet die zweite Teilzylinderschale 22 des Backenendes 11 auf der ersten Teilzylinderschale 14 des Brillenbügels 12 auf einer ersten gemeinsamen Gleitfläche, und die Federzungen 18a und 18b verhindern durch ihren Anpressdruck auf das Backenende, dass Backenende und Brillenbügel auseinanderfallen.

Im zugeklappten Zustand der Brille, wie er in Fig. 7 von oben als Ausschnitt gezeigt, ist zu erkennen, dass beim Zusammenklappen die Federzunge 18b mit ihrem Anschlag 17 aus ihrer ersten Endposition (im aufgeklappten Zustand der Brille) heraus gleitet und entlang einer zweiten Gleitfläche 20, auf der sie auf dem Rahmen federnd aufliegt, in eine zweite Endposition gebracht wird. In dieser aufgeklappten Position des Brillenbügels 12 rastet der erste Anschlag 17 des Brillenbügels 12 gegen den zweiten Anschlag 19 des Backenendes 11, wodurch einer leichter Öffnungswiderstand erzeugt wird. Dadurch wird ein unbeabsichtigtes Aufklappen der Brille vermieden.

In den Fig. 6 und 7 ist weiterhin zu erkennen, dass beim Auf- bzw. Zusammenklappen der Brille der Anschlag 17 entlang der zweiten Gleitfläche 20, mit der er auf dem Backenende 11 aufliegt, sich in jedem Öffnungszustand relativ zur Auflagefläche der ersten Teilzylinderschale 14 auf der zweiten Teilzylinderschale 22 auf der gegenüberliegenden Seite der Drehachse 16 befindet. Somit ist gewährleistet, dass in jeder Position dieser Bewegung die erste Teilzylinderschale 14 des Bügels 12 gegen die zweite Teilzylinderschale 22 des Backenendes 11 gedrückt wird und die Verbindung zwischen Bügel und Backenende wird gewährleistet.

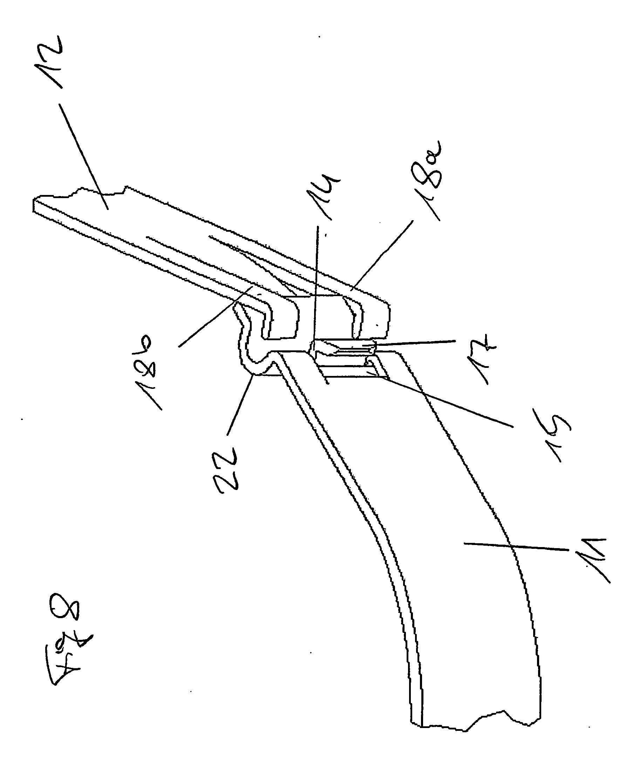

In Fig. 8 sind Backenende 11 und Bügel 12 nochmals in einer perspektivischen Ansicht von schräg oben gezeigt, wobei die Brille in diesem Fall noch nicht ganz aufgeklappt ist. Auch hier ist wieder zu erkennen, wie die Federzungen 18a und 18b gegen die Rückseite der zweiten Teilzylinderschale 22 des Backenendes 11 drücken, während andererseits die erste Teilzylinderschale 14 des Brillenbügels 12 um die zweite Teilzylinderschale 22 herumgeführt ist, wodurch die beiden Zylinderflächen aufeinander zum Liegen kommen. Da die Brille, wie erwähnt, in diesem Fall noch nicht ganz aufgeklappt ist, kommt der erste Anschlag 17 des Brillenbügels 12 noch nicht ganz in der Anschlagsöffnung 15 des Backenendes 11 auf der Anschlagszunge 13 zum Liegen.

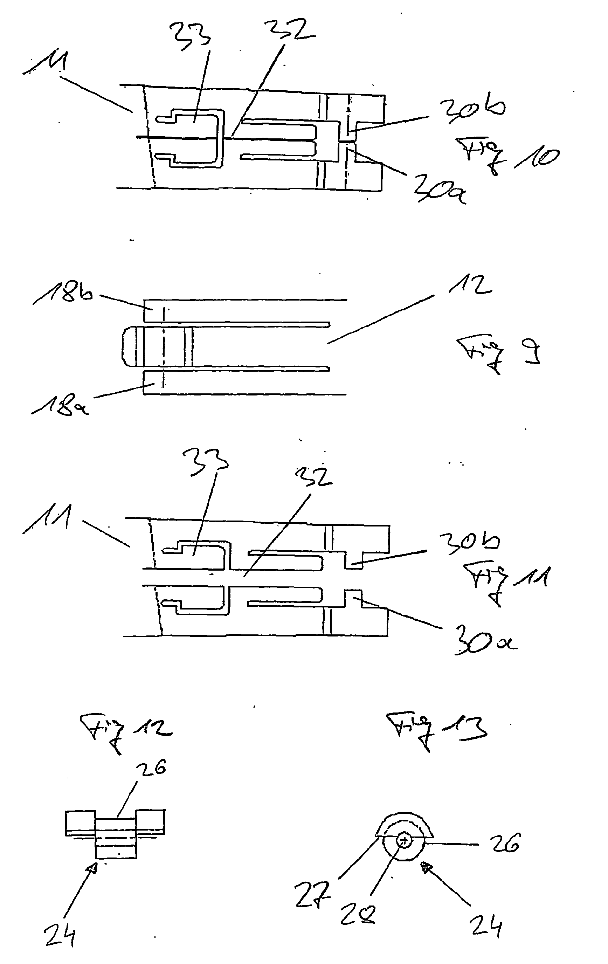

In Fig. 9 ist ein Ende eines Brillenbügels 12 gezeigt, wie er bei einem Brillengestell mit einem Gleitelement eingesetzt werden kann. Die Elemente des Brillenbügels 12 sind in diesem Fall jedoch entsprechend dem eines Brillenbügels zur Verwendung ohne Gleitelement wie z.B. in Fig. 2 abgebildet. Deshalb wird an dieser Stelle nicht näher auf die Einzelheiten eingegangen.

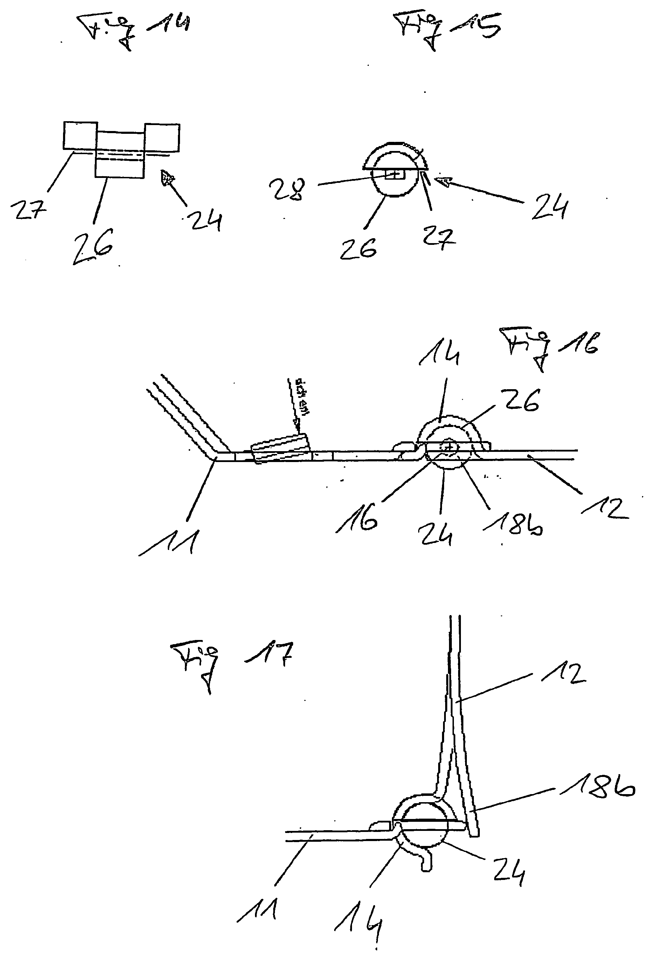

Die Fig. 10 und 11 zeigen als entsprechendes Gegenstück zum Brillenbügel aus Fig. 9 ein Backenende 11, welches zur Verwendung eines Gleitelements vorgesehen ist. Das Backenende 11 weist einen Schlitz 32 auf, welcher das Backenende 11 zweiteilt und sich (hier nicht dargestellt) durch den kompletten Rahmen bis zu Öffnungen zur Aufnahme von Brillengläsern hindurch zieht. Dieser Schlitz 32 hat einerseits die Funktion, dass der Rahmen elastisch aufgebogen werden kann (in Fig. 11 dargestellt), sodass Brillengläser in die entsprechenden Öffnungen eingesetzt werden können. Dies kann natürlich so auch bei den oben beschriebenen Brillengestellen ohne Gleitelement realisiert werden. Zusätzlich haben sie hier noch die Funktion, dass durch das Aufbiegen Gleitelemente in das Backenende 11 eingebracht und dort fixiert werden können. Zum Anbringen eines Gleitelements 24, wie es nachstehend unter Bezugnahme auf die Fig. 12 und 14 erläutert wird, weist das Backenende 11 an seiner durch den Schlitz 32 erzeugten unteren Hälfte wie auch seiner oberen Hälfte jeweils einen Haltezapfen 30a bzw. 30b auf, welche in ein Gleitelement eingreifen und dieses somit fest mit dem Backenende verbinden können. Die Backenenden 11 der Fig. 10 und 11 weisen weiterhin Sicherungszungen 33 auf, die durch den Schlitz 32 zweigeteilt werden und die insgesamt eine U-förmige Gestalt haben. Diese Sicherungszungen können hergestellt werden, indem sie aus den Backenenden 11 entsprechend ihrer Form an drei Kanten ausgesägt, ausgeschnitten oder ausgestanzt werden. Auf die Funktion dieser Sicherungszungen wird weiter unten noch näher eingegangen.

Die Fig. 12 und 14 zeigen jeweils ein Gleitelement 24, welches im Fall der Fig. 12 aus Metall gefertigt ist und im Fall der Fig. 14 ein Kunststoffspritzgussteil ist. Wie anhand dieser Ansichten zu erkennen ist, weisen solche Gleitelemente Öffnungen 28 auf, die in diesen beiden gezeigten Ausführungsformen jeweils als durchgehende Öffnungen ausgebildet sind, wobei die Öffnung in der Metallausführung der Fig. 12 einen kreisformgen Querschnitt aufweist und beim Spritzgußteil aus Fig. 14 einen rechteckigen Querschnitt hat. Die entsprechenden Querschnitte sind in den Abbildungen 13 und 14 gezeigt, welche Ansichten von oben auf die Gleitelemente 24 der Fig. 12 bzw. 14 darstellen. Die unterschiedlichen Querschnittsformen der Öffnungen 28 resultieren aus dem Herstellungsverfahren, bei dem bei einem Gleitelement aus Metall die Öffnung vorzugsweise durch eine Bohrung eingefügt wird, während beim Spritzgußteil die Öffnung auch rechteckig sein kann, was den Vorteil hat, dass das Gleitelement 24 beim Einbringen in ein Backenende 11 besser gegen Verdrehungen gesichert ist In den Fig. 12 und 14 ist weiterhin zu erkennen, dass ein Gleitelement 24 einen zylinderförmigen Abschnitt 26 aufweist, der sich in der Mitte des Gleitelements befindet, sowie zwei Auflageflächen 27 an den jeweiligen Enden des Gleitelements. Bei den gezeigten Ausführungsformen gemäß der Fig. 12 bis 15 sind die Auflageflächen 27 so ausgeformt, dass sie als Teilzylinderabschnitte auf dem mittleren, zylinderförmigen Abschnitt 26 aufgebracht sind, wobei die Teilzylinderabschnitte und der mittlere, zylinderförmige Abschnitt eine gemeinsame Achse ausbilden, welche in der Mitte der Öffnungen 28 liegt. Man kann sich also ein Herstellungsverfahren vorstellen, bei dem drei Zylinder, von denen einer einen kleineren Radius aufweist und die beiden anderen einen größeren, so aufeinander gestapelt werden, dass der Zylinder mit dem kleinen Radius sich in der Mitte befindet und in einem nächsten Schritt die beiden außen liegenden Zylinder senkrecht zu ihren Stirnflächen teilweise abgeschnitten werden. Die Schnitte durch die beiden äußeren Zylinder stellen dann jeweils die parallelen Auflageflächen 27 des so entstandenen Gleitelements 24 dar. Diese beschriebene Herstellungsmethode dient jedoch eher zur Erläuterung der Form des Gleitelements, da wie oben bereits erwähnt, kostengünstigere Verfahren angewendet werden können, wie z.B. ein Kunststoffspritzverfahren.

Die Fig. 16 und 17 zeigen ein Brillengestell mit einem Gleitelement 24 in einer Ansicht von oben, wobei in diesem Ausschnitt ein Backenende 11 und ein Ende eines Brillenbügels 12 in zusammengebautem Zustand der Brille abgebildet ist. Fig. 16 zeigt dabei die Brille in aufgeklapptem und Fig. 17 in zusammengeklapptem Zustand. Während der Brillenbügel 12 mit den Federzungen 18a und18b sowie einer ersten Teilzylinderschale 14 im wesentlichen dem eines Brillengestells ohne Gleitelement entspricht, weist das Backenende 11 in dem hier gezeigten Fall keine direkt angeformte zweite Teilzylinderschale 22 auf, sondern diese wird ersetzt durch die Oberfläche des Gleitelements 24 bzw. genauer gesagt durch dessen zylinderförmigen Abschnitt 26, dessen Oberfläche die Teilzylinderschale bildet. Das bedeutet, das Gleitelemente 24 ist fest mit den Backenenden 11 verbunden und die erste Teilzylinderschale 14 des Brillenbügels 12 gleitet über das Gleitelement.

Das Gleitelement 24 wird bei der Herstellung bzw. beim Zusammenbau der Brille in das Backenende 11 eingebaut, indem dieses entlang des Schlitzes 32 elastisch aufgebogen wird, das Gleitelement dann so eingesetzt wird, dass die Haltezapfen 30a und 30b (siehe Fig. 11) das Gleitelement fixieren, indem die beiden Haltezapfen in die Öffnung 28 eingreifen und die Auflageflächen 27 auf dem Backenende 11 zum Liegen kommen. Somit ist gewährleistet, dass das Gleitelement 24 fest und nicht drehbar mit dem Backenende 11 verbunden ist. In Fig. 16 ist zu erkennen, dass das Backenende 11 und der Brillenbügel 12 so geformt sind, dass sie an der Brillenaußenseite (bei aufgeklappter Brille) eine im wesentlichen plane Oberfläche bilden. Alternative kann aber auch die Drehachse 16 weiter nach außen verlagert werden, sodass auch außen eine runde Ausformung ersichtlich ist. Die erste Teilzylinderschale 14 ragt dann weniger weit in die Brilleninnenseite hinein. Entsprechendes gilt für die in den Fig. 1 bis 8 gezeigte Ausführungsform.

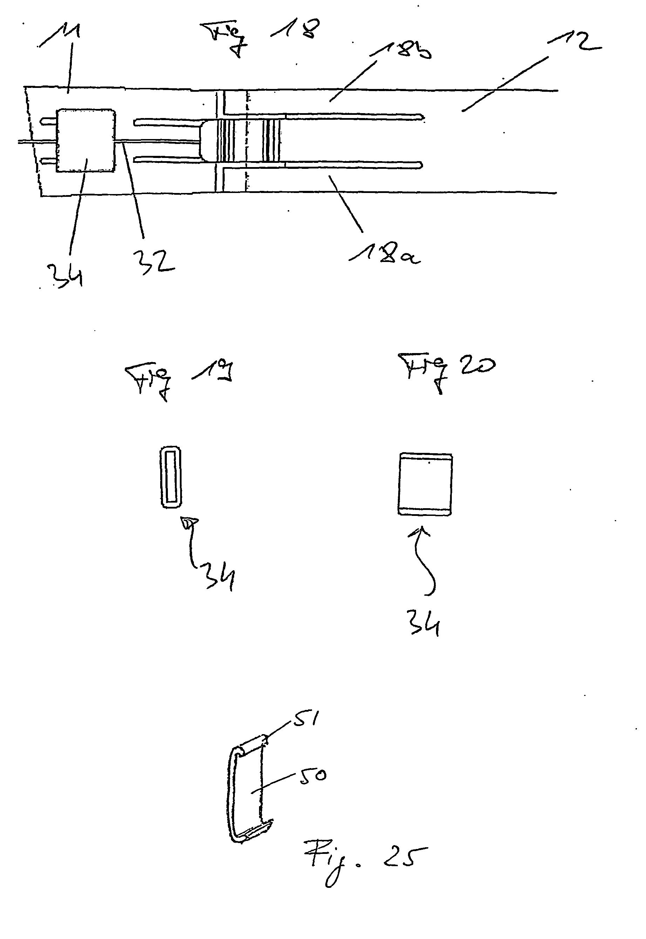

Fig. 18 zeigt das Brillengestell der Fig. 16 und 17 in einer Ansicht von der Seite, wobei hier zu erkennen ist, wie eine aufsteckbare Sicherung 34 das Backenende 11 (und damit den Rahmen 10), welcher durch den Schlitz 32 zweigeteilt ist, sichert, indem die beiden Hälften durch das Aufstecken der Sicherung mit einander fest verbunden werden. Somit kann einerseits durch Herausnehmen der Sicherung 34 der Rahmen elastisch auseinander gebogen werden, um beispielsweise die Brillengläser einzusetzen oder zu wechseln, und andererseits das Gleitelement 24 zu positionieren. Die Sicherung 34 ist in den Fig. 19 und 20 in einer Ansicht entlang des Backenendes 11 bzw. nochmals in einer Ansicht von der Seite (entsprechend Fig. 18) gezeigt. Das Einsetzen der Sicherung 34 in das Backenende 11 geschieht, indem die U-förmige Sicherungszunge 33 (siehe Fig. 11) nach außen oder innen gebogen wird, die Sicherung aufgesteckt wird und die elastische Sicherungszunge dann wieder in ihre Ausgangsposition zurückfedert. Dies ist in Fig. 16 schematisch eingezeichnet. Anstelle der die Sicherungszunge 33 vollständig umgreifenden Sicherung 34 könnte auch ein Sicherungsclip 50 vorgesehen werden, wie er in Fig. 25 veranschaulicht ist, der über die Sicherungszunge 33, oder aber über das Backenende 11 des Gestellrahmens so aufgeclipst wird, dass dessen Federzungen 51 die Ränder der Zunge 33 bzw. des Backenendes 11 umgreifen. Wird ein das Backenende 11 umgreifender Sicherungsclip 50 verwendet, kann auf die Ausbildung der Sicherungszunge 33 selbstverständlich verzichtet werden.

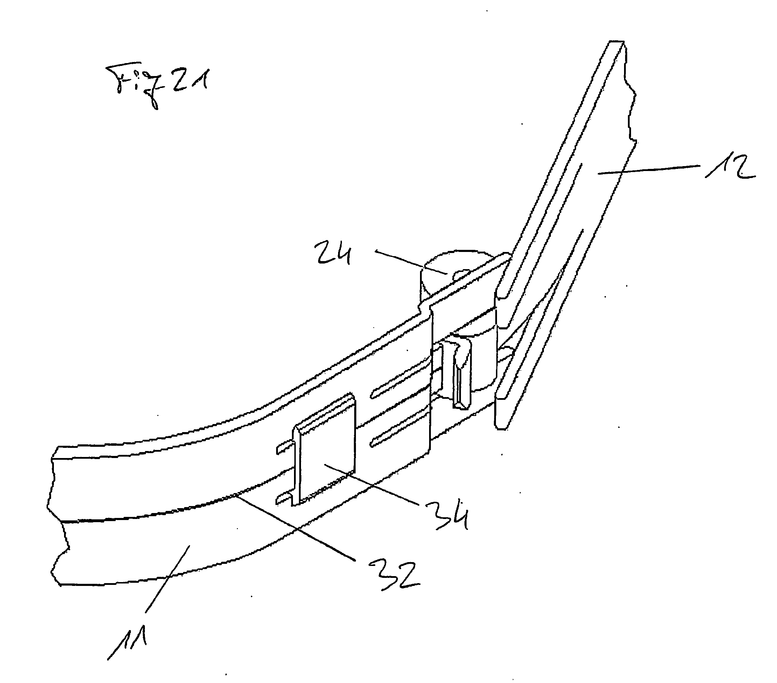

Fig. 21 zeigt eine perspektivische Ansicht des Brillengestells mit Gleitelement 24 aus den Fig. 16 und 17, wobei die Brille wiederum in einem Zustand abgebildet ist, bei dem der Brillenbügel 12 noch nicht ganz in seine Endposition nach außen geschwenkt ist.

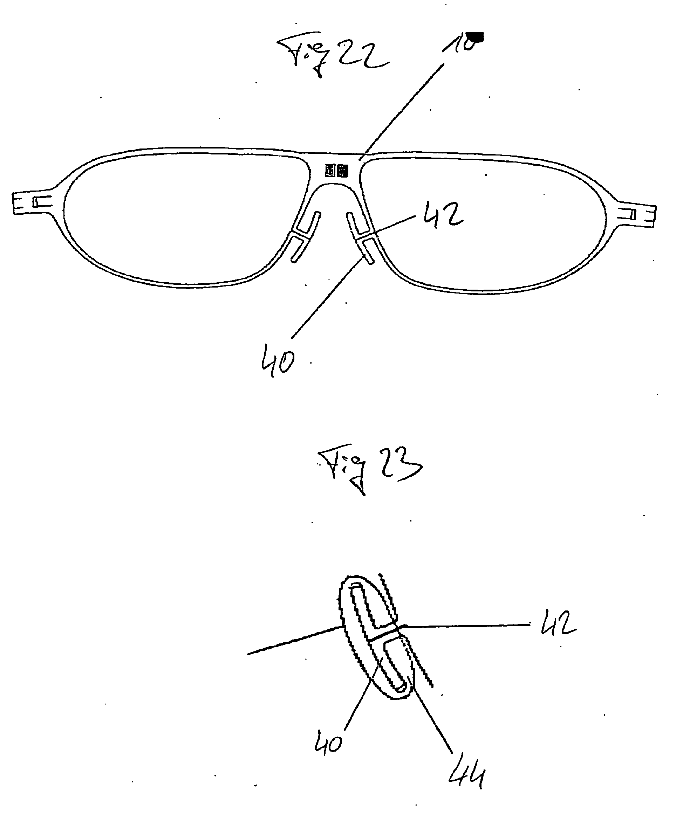

Fig. 22 zeigt ein Brillengestell mit einem Rahmen 10, bei dem die Schlitze zum Aufbiegen der Öffnungen für die Brillengläser nicht wie in den vorher gezeigten Ausführungsformen der Erfindung durch die Backenenden 11 geschnitten sind, sondern sie verlaufen bei dieser Ausführungsform durch Halterungen 40, wodurch sie als Schlitze 42 diese Halterungen zweiteilen. Das bedeutet, dass zum Einsetzen der Brillengläser der Brillenrahmen 10 entlang der Schlitze 42 aufgebogen werden kann, wobei nach dem Einsetzen der Brillengläser der Brillenrahmen wieder elastisch zurückgeformt wird und die zweigeteilten Halterungen 14 für die Nasenauflagen dann entsprechend Fig. 23 durch die Nasenauflagen 44 verschlossen und damit gesichert werden können. Diese Variante findet vorzugsweise bei Brillengestellen ohne Gleitelement Anwendung.

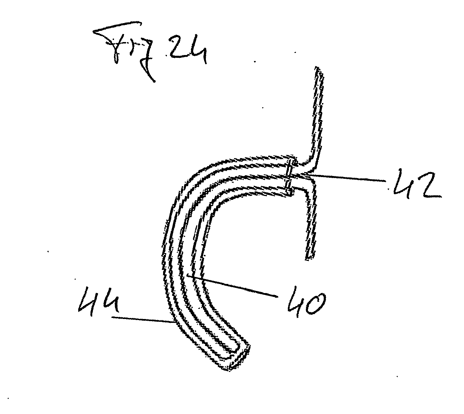

Fig. 24 zeigt eine alternative Ausführungsform zu Fig. 23 mit einer Nasenauflagenhalterung mit hakenförmigen Halterungen 40, auf die nach dem Einsetzen der Brillengläser schlauchförmige Nasenauflagen 44 aufgesteckt werden. Die Halterungen 40 können durch Biegen an die Nasenform angepasst werden.

## Patentansprüche

1. Brillengestell mit einem Rahmen (10) zur Aufnahme von Brillengläsern und zu beiden Seiten des Rahmens je einem Brillenbügel (12), der mittels einem Scharnier seitlich an Backenenden (11) des Rahmens angelenkt ist, wobei der Brillenbügel an dem Ende, welches dem Rahmen zugewandt ist, eine erste Teilzylinderschale (14) aufweist, wobei die Zylinderachse der Drehachse (16) des Scharniers entspricht, **dadurch gekennzeichnet, dass**
die erste Teilzylinderschale auf einer an dem Rahmen vorgesehenen, eine erste Gleitfläche bildenden zweiten Teilzylinderschale (22) gleitend aufliegt, und
der Brillenbügel an dem Ende, welches dem Rahmen zugewandt ist, mindestens eine Federzunge (18a, 18b) aufweist, welche so an einer zweiten Gleitfläche (20) auf dem Rahmen federnd aufliegt, dass der die zweite Teilzylinderschale aufweisende Bereich des Rahmens zwischen der ersten Teilzylinderschale und der Federzunge federnd aufgenommen ist, und ferner
der Bügel (12) aus einem Flachmaterial besteht, welches an dem Ende, welches dem Rahmen zugewandt ist, mittels zweier Längsschlitze in drei Streifen unterteilt ist, wobei mindestens ein Streifen eine Ausbuchtung aufweist, welche die erste Teilzylinderschale bildet, und mindestens ein Streifen als Federzunge (18a, b) ausgebildet ist, wobei
an dem Rahmen (10) an den Backenenden (11) jeweils ein separates Gleitelement (24) vorgesehen ist, dessen Oberfläche die zweite Teilzylinderschale (22) aufweist.

2. Brillengestell nach Anspruch 1, **dadurch gekennzeichnet, dass** sich die erste Teilzylinderschale (14) auf der Außenseite des Brillenbügels (12) befindet

3. Brillengestell nach Anspruch 1 oder 2, **dadurch gekennzeichnet, dass** die erste Teilzylinderschale (14) einen Querschnitt aufweist, der einem Drittel bis Dreiviertel eines Kreises entspricht.

4. Brillengestell nach Anspruch 1 oder 2, **dadurch gekennzeichnet, dass** die erste Teilzylinderschale (14) eine näherungsweise halbzylinderförmige Oberfläche aufweist.

5. Brillengestell nach einem der vorhergehenden Ansprüche, **dadurch gekennzeichnet, dass** das Gleitelement (24) einteilig ausgebildet ist und mindestens einen vorzugsweise zylinderförmigen Abschnitt (26) aufweist, dessen Oberfläche die zweite Teilzylinderschale (22) bildet, und ferner mindestens eine Auflagefläche (27) aufweist, mit der das Gleitelement am Rahmen (10) festliegt.

6. Brillengestell nach Auspruch 5, **dadurch gekennzeichnet, dass** das Gleitelement (24) mindestens eine Öffnung (28) aufweist, die im wesentlichen koaxial zur Mittelsenkrechten des zylinderförmigenAbscbmitts (26) verläuft und ferner der Rahmen (10) mindestens einen Haltezapfen (30a, 30b) aufweist, der in die Öffnung eingreift, um das Gleitelement mit dem Rahmen zu verbinden.

7. Brillengestell nach Anspruch 6, **dadurch gekennzeichnet, dass** das Gleitelement (24) ein Kunststoffspritzgussteil ist.

8. Brillengesteil nach Anspruch 7, **dadurch gekennzeichnet, dass** die Öffnung (28) einen rechteckigen Querschnitt hat.

9. Brillengestell nash Anspruch 6, **dadurch gekennzeichnet, dass** das Gleitelement (24) aus Metall gefertigt ist.

10. Brillengestell nach Anspruch 9, **dadurch gekennzeichnet, dass** die Öffnung (28) einen runden Querschnitt hat.

## Claims

1. A glasses frame with a frame (10) for receiving eyeglass lenses and with a temple piece (12) on both respective sides of the frame, which is coupled laterally to a cheek end (11) of the frame by means of a hinge, where the temple piece, at the end facing to the frame, comprises a first partial cylinder shell (14), wherein the cylinder axis corresponds to the rotational axis (16) of the hinge, **characterised in that** the first partial cylinder shell rests slidingly on a second partial cylinder shell (22) that is provided at the frame and defines a first sliding area, and
the temple piece, at the end facing the frame, comprises at least one spring tongue (18a, 18b), which rests springy on a second sliding area (20) on the frame, such that the region of the frame comprising the second partial cylinder shell is springy received between the first partial cylinder shell and the spring tongue, and further
the temple (12) consists of flat material that at the end facing the frame, is divided into three tabs by two longitudinal slots, wherein at least one tab has a bulge which defines the first partial cylinder shell, and wherein at least one tab is designed as a spring tongue (18a, b), and wherein
a separate sliding element (24) is provided at each cheek end (11) of the frame (10), wherein the surface of said sliding element (24) comprises the second partial cylinder shell (22).

2. Glasses frame according to claim 1, **characterized in that** the first partial cylinder shell (14) is located on the exterior side of the temple piece (12).

3. Glasses frame according to claim 1 or 2, **characterized in that** the first partial cylinder shell (14) comprises a cross-section that corresponds to one third up to three quarters of a circle.

4. Glasses frame according to claim 1 or 2, **characterized in that** the first partial cylinder (14) comprises an approximately semi-cylindrical surface.

5. Glasses frame according to any one of the preceding claims, **characterized in that** the sliding element (24) is formed in one piece and comprises at least one preferably cylindrical section (26), the surface of which defines the second partial cylinder shell (22), and additionally at least one supporting surface (27), with which the sliding element rests fixably at the frame (10).

6. Glasses frame according to claim 5, **characterized in that** the sliding element (24) comprises at least one opening (28) that extends essentially coaxial to the mean perpendicular of the cylindrical section (26), and that the frame (10) further comprises at least one retaining pin (30a, 30b) engaging into the opening to connect the sliding element to the frame.

7. Glasses frame according to claim 6, **characterized in that** the sliding element (24) is an injection-molded plastic part.

8. Glasses frame according to claim 7, **characterized in that** the opening (28) has a rectangular cross-section.

9. Glasses frame according to claim 6, **characterized in that** the sliding element (24) is made of metal.

10. Glasses frame according to claim 9, **characterized in that** the opening (28) has a round cross-section.

## Revendications

1. Monture de lunettes comprenant un cadre (10) pour le logement de verres de lunettes et, sur chacun des deux côtés du cadre, une branche de lunettes (12) qui est articulée au moyen d'une charnière latéralement sur des extrémités de mâchoire (11) du cadre, la branche de lunettes présentant sur l'extrémité tournée vers le cadre une première coquille cylindrique partielle (14), l'axe de cylindre correspondant à l'axe de rotation (16) de la charnière, **caractérisée en ce que**
la première coquille cylindrique partielle repose par glissement sur une seconde coquille cylindrique partielle (22) prévue sur le cadre et formant une première surface de glissement, et
la branche de lunettes présente sur l'extrémité tournée vers le cadre au moins une languette élastique (18a, 18b), qui repose de façon élastique sur une seconde surface de glissement (20) sur le cadre, de telle sorte que la zone, présentant la seconde coquille cylindrique partielle, du cadre est réceptionnée de façon élastique entre la première coquille cylindrique partielle et la languette élastique, et en outre
la branche (12) est également à base d'un matériau plat, lequel est subdivisé sur l'extrémité tournée vers le cadre au moyen de deux fentes longitudinales en trois bandes, au moins une bande présentant un renfoncement qui forme la première coquille cylindrique partielle, et au moins une bande étant conçue sous forme de languette élastique (18a, b),
un élément de glissement séparé (24), dont la surface présente la seconde coquille cylindrique partielle (22), étant prévu à chaque fois sur le cadre (10) sur les extrémités de mâchoire (11).

2. Monture de lunettes selon la revendication 1, **caractérisée en ce que** la première coquille cylindrique partielle (14) se trouve sur le côté extérieur de la branche de lunettes (12).

3. Monture de lunettes selon la revendication 1 ou 2, **caractérisée en ce que** la première coquille cylindrique partielle (14) présente une section transversale qui correspond à un tiers jusqu'aux trois-quarts d'un cercle.

4. Monture de lunettes selon la revendication 1 ou 2, **caractérisée en ce que** la première coquille cylindrique partielle (14) présente une surface approximativement en forme de demi-cylindre.

5. Monture de lunettes selon l'une quelconque des revendications précédentes, **caractérisée en ce que** l'élément de glissement (24) est conçu d'une seule pièce et présente au moins une partie (26) de préférence cylindrique, dont la surface forme la seconde coquille cylindrique partielle (22) et présente en outre au moins une surface d'appui (27), avec laquelle l'élément de glissement est fixé sur le cadre (10).

6. Monture de lunettes selon la revendication 5, **caractérisée en ce que** l'élément de glissement (24) présente au moins une ouverture (28), qui est agencée sensiblement sur le même axe que la médiatrice de la partie (26) cylindrique et, en outre, le cadre (10) présente au moins un tourillon de retenue (30a, 30b) qui s'engage dans l'ouverture, afin de relier l'élément de glissement au cadre.

7. Monture de lunettes selon la revendication 6, **caractérisée en ce que** l'élément de glissement (24) est une pièce moulée par injection en plastique.

8. Monture de lunettes selon la revendication 7, **caractérisée en ce que** l'ouverture (28) a une section transversale rectangulaire.

9. Monture de lunettes selon la revendication 6, **caractérisée en ce que** l'élément de glissement (24) est fabriqué en métal.

10. Monture de lunettes selon la revendication 9, **caractérisée en ce que** l'ouverture (28) a une section transversale ronde.
